# DEMANDE DE BREVET EUROPEEN

(11) **EP 3 120 697 A1**
(43) Date de publication de la demande: **25.01.2017**
(21) Numéro de dépôt: 16180358.0
(22) Date de dépôt: 20.07.2016
(51) Int. Cl.: A01K 5/02

(54) **SYSTEME AUTONOME DE DISTRIBUTION POUR NOURRIR DES ANIMAUX**

(30) Priorité: 23.07.2015 FR 1557004
(71) Demandeur: ASSERVA, 22400 Lamballe (FR)
(72) Inventeur: CAMPION, Louis-Pierre, 22400 Lamballe (FR); CORDON, Xavier, 22400 Lamballe (FR); MONSIMERT, Damien, 22400 Lamballe (FR); CANTIN, Dominique, 22400 Lamballe (FR)
(74) Mandataire: Le Guen-Maillet

(57) **Abrégé**

L'invention concerne un système autonome de distribution (100) d'aliments pour animaux comportant :
- un doseur (102) alimenté en aliments,
- une auge (114) disposée sous le doseur (102),
- un système de déversement (108) prenant alternativement une première position dans laquelle les aliments se déversent dans l'auge (114) et une deuxième position dans laquelle les aliments ne se déversent dans l'auge (114),
- un détecteur de présence (116) pour détecter la présence d'un animal devant l'auge (114),
- une mémoire (120) dans laquelle est stockée l'identité de chaque animal et ses caractéristiques alimentaires,
- une unité de gestion (112) qui commande le système de déversement (108),
- une interface homme-machine (150) connectée à l'unité de gestion (112) et permettant d'assurer la programmation du système autonome de distribution (100) et l'enregistrement dans la mémoire (120) de l'identité de chaque animal et des caractéristiques alimentaires de chacun d'eux.

## Description

La présente invention concerne un système autonome de distribution pour nourrir des animaux, en particulier des porcs.

Les animaux d'élevage, tels que des porcs, sont nourris à l'aide de différents aliments, et, en particulier, à l'aide d'aliments secs ou fluides, tels que de la bouillie ou de la soupe.

Pour nourrir les animaux, différents systèmes automatisés sont connus.

En particulier, on connaît un système qui comprend un réservoir d'aliment, une canalisation qui forme une boucle à partir du réservoir et sur laquelle est branchée une pompe qui entraîne l'aliment dans la canalisation.

Le long de la canalisation, une pluralité de doseurs est prévue, et chacun est disposé au-dessus d'une auge et est prévu pour prendre alternativement une position fermée dans laquelle l'aliment n'est pas délivré dans l'auge, et une position ouverte dans laquelle une ration de l'aliment est délivrée dans l'auge.

Tous les doseurs sont reliés en réseau avec une unité de gestion distante comme par exemple un ordinateur qui permet à un exploitant de gérer tous les doseurs à distance.

Au niveau de chaque auge est prévu un détecteur, par exemple du type RFID, qui détecte une information portée par l'animal présent devant ladite auge, et qui transmet cette information à l'unité de gestion. En fonction de cette information, l'unité de gestion commande le doseur correspondant à ladite auge en ouverture ou en fermeture.

L'installation d'un tel système automatisé est onéreuse car elle nécessite la réalisation d'un réseau, la mise en place de plusieurs doseurs, ainsi que la mise en place d'une unité de gestion qui est généralement surdimensionnée par rapport à l'utilisation finale.

Un objet de la présente invention est de proposer un système autonome de distribution pour nourrir des animaux qui ne présente pas les inconvénients de l'art antérieur et qui en particulier limite les investissements nécessaires à la mise en place d'un système automatisé de distribution.

A cet effet, est proposé un système autonome de distribution d'aliments pour animaux comportant :
- un doseur alimenté en aliments par une canalisation d'aliment,
- une auge disposée sous le doseur,
- un système de déversement prévu pour prendre alternativement une première position dans laquelle les aliments peuvent se déverser du doseur dans l'auge et une deuxième position dans laquelle les aliments ne peuvent pas se déverser du doseur dans l'auge,
- un détecteur de présence prévu pour détecter la présence d'un animal devant l'auge,
- une mémoire dans laquelle est stockée l'identité de chaque animal et ses caractéristiques alimentaires,
- une unité de gestion connectée au détecteur de présence, à la mémoire et au système de déversement, et qui commande le système de déversement en fonction de l'animal détecté par le détecteur de présence et des données enregistrées dans la mémoire,
- une interface homme-machine connectée à l'unité de gestion et permettant d'assurer la programmation du système autonome de distribution et l'enregistrement dans la mémoire de l'identité de chaque animal et des caractéristiques alimentaires de chacun d'eux.

Avantageusement,, le système autonome de distribution comporte une canalisation d'eau reliant une source d'eau à l'auge, et une vanne d'eau prévue pour prendre alternativement une position ouverte dans laquelle l'eau peut se déverser de la canalisation d'eau dans l'auge et une position fermée dans laquelle l'eau ne peut pas se déverser de la canalisation d'eau dans l'auge.

Avantageusement, le système autonome de distribution comporte un capot dans lequel sont logés le doseur, le système de déversement et, éventuellement la vanne d'eau, et l'interface homme-machine est fixée sur le capot.

Avantageusement, l'interface homme-machine comporte des boutons et un écran.

Avantageusement, le système autonome de distribution comporte en outre un câble d'alimentation électrique destiné à être électriquement connecté à un réseau électrique.

Avantageusement, le système autonome de distribution comporte en outre un point d'accès réseau connectée à l'unité de gestion.

Selon un mode de réalisation particulier, le point d'accès réseau est un système de communication sans fil.

Selon un autre mode de réalisation particulier, le point d'accès réseau est une prise réseau.

Les caractéristiques de l'invention mentionnées ci-dessus, ainsi que d'autres, apparaîtront plus clairement à la lecture de la description suivante d'un exemple de réalisation, ladite description étant faite en relation avec la Fig. unique qui est une représentation schématique d'un système autonome de distribution d'aliment selon l'invention.

La Fig. unique montre un système autonome de distribution 100 qui est destiné à nourrir des animaux tels que des porcs.

Le système autonome de distribution 100 comporte un doseur 102 et une auge 114 disposée sous le doseur 102.

Le système autonome de distribution 100 est alimenté en aliments par une canalisation d'aliments 104 provenant d'un réservoir d'aliments sec. La canalisation d'aliments 104 déverse l'aliment dans le doseur 102.

Le système autonome de distribution 100 comporte également un système de déversement 108 qui est prévu pour prendre alternativement une première position dans laquelle les aliments peuvent se déverser du doseur 102 dans l'auge 114 et une deuxième position dans laquelle les aliments ne peuvent pas se déverser du doseur 102 dans l'auge 114.

L'auge 114 est ainsi disposée de manière à réceptionner l'eau et l'aliment.

Le système autonome de distribution 100 comporte également une mémoire 120 dans laquelle est stockée l'identité de chaque animal susceptible de se présenter et ses caractéristiques alimentaires comme par exemple la quantité d'aliments qu'il peut consommer par jour.

Le système autonome de distribution 100 comporte également une unité de gestion 112.

Le système autonome de distribution 100 comporte également un détecteur de présence 116 disposé au voisinage de l'auge 114 et prévu pour détecter la présence d'un animal devant l'auge 114 et pour transmettre l'identité de cet animal à l'unité de gestion 112.

Le détecteur de présence 116, la mémoire 120 et le système de déversement 108 sont connectés à l'unité de gestion 112. Ainsi, selon l'animal détecté par le détecteur de présence 116 et en fonction des données enregistrées dans la mémoire 120, l'unité de gestion 112 commande le système de déversement 108.

Afin d'assurer l'enregistrement dans la mémoire 120 de l'identité de chaque animal et des caractéristiques alimentaires de chacun d'eux, le système autonome de distribution 100 comporte une interface homme-machine 150 connectée à l'unité de gestion 112 et qui comporte ici des boutons 152 et un écran 154. L'interface homme-machine 150 est solidaire des autres éléments du système autonome de distribution 100 et est par exemple fixée sur un capot 160 dans lequel sont logés lesdits autres éléments, à savoir au moins le doseur 102 et le système de déversement 108.

L'écran 154 permet de visualiser les données entrées à l'aide des boutons 152.

L'interface homme-machine 150 permet ainsi à un exploitant de programmer le système autonome de distribution 100 sans qu'il soit nécessaire de mettre en place un réseau informatique lourd et coûteux.

L'interface homme-machine 150 permet par exemple d'enregistrer les quantités de nourriture allouées à chaque animal au cours de la journée, ainsi que toutes les autres données devant être enregistrées.

Afin de vérifier que l'animal a bien vidé son auge 114, une sonde capacitive peut être installée sur l'auge 114. Par la valeur qu'elle mesure, cette sonde permet de détecter si tout l'aliment a été consommé ou non. Cette sonde est connectée à l'unité de gestion 112 et en fonction de la valeur mesurée par la sonde et des quantités de nourriture allouées à chaque animal au cours de la journée, l'unité de gestion 112 va, ou non, déclencher l'alimentation en aliment de l'auge 114.

Selon un mode de réalisation particulier, le système autonome de distribution 100 est alimenté en eau par une canalisation d'eau 106 provenant d'une source d'eau et la canalisation d'eau 106 déverse l'eau dans l'auge 114.

Le système autonome de distribution 100 comporte alors également une vanne d'eau 110 qui est prévue pour prendre alternativement une position ouverte dans laquelle l'eau peut se déverser de la canalisation d'eau 106 dans l'auge 114 et une position fermée dans laquelle l'eau ne peut pas se déverser de la canalisation d'eau 106 dans l'auge 114.

La vanne d'eau 110 est alors connectée à l'unité de gestion 112. Ainsi, selon l'animal détecté par le détecteur de présence 116 et en fonction des données enregistrées dans la mémoire 120, l'unité de gestion 112 commande également la vanne d'eau 110.

La vanne d'eau 110 est de préférence également logée dans le capot 160.

Dans ce cas, afin de vérifier que l'animal a bien vidé son auge 114, une sonde avec analyse de la conduction électrique peut être installée sur l'auge 114. Par la valeur qu'elle mesure, cette sonde permet de détecter si tout l'aliment et l'eau ont été consommés ou non. Cette sonde est connectée à l'unité de gestion 112 et en fonction de la valeur mesurée par la sonde et des quantités de nourriture allouées à chaque animal au cours de la journée, l'unité de gestion 112 va, ou non, déclencher l'alimentation en aliment et/ou en eau de l'auge 114.

Pour assurer l'alimentation électrique du système autonome de distribution 100, celui-ci présente un câble d'alimentation électrique 156 pouvant être électriquement connecté à un réseau électrique.

Lorsque l'exploitant a installé plusieurs systèmes autonomes de distribution 100, et que la gestion de chacun d'eux devient lourde du fait de leur nombre, il est préférable d'assurer une gestion collective de tous les systèmes autonomes de distribution 100. A cette fin, le système autonome de distribution 100 comporte un point d'accès réseau 158, 162 électriquement connectée à l'unité de gestion 112. Ainsi, il est possible de connecter chacun des systèmes autonomes de distribution 100 à une unité centrale où l'exploitant peut assurer la programmation de tous les systèmes autonomes de distribution 100 simultanément. L'unité centrale est chargée d'un logiciel approprié et peut être un ordinateur, une tablette, ou un smartphone par exemple.

Le point d'accès réseau 162 peut être un système de communication sans fil, comme par exemple un système de communication Wifi®.

Le point d'accès réseau 158 peut être une prise réseau 158 dans laquelle un câble réseau est connecté et ainsi dans chacun des systèmes autonomes de distribution 100 pour les relier à l'unité centrale.

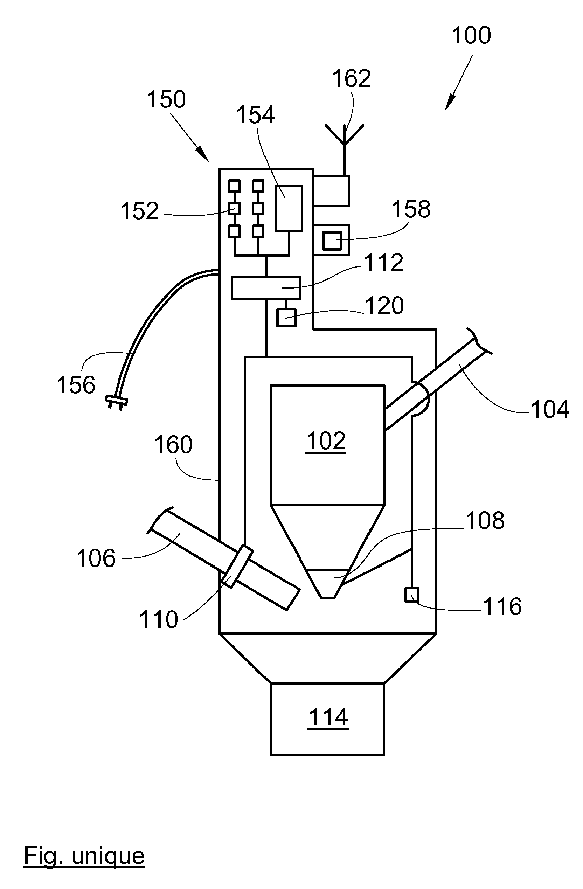

## Revendications

1. Système autonome de distribution (100) d'aliments pour animaux comportant :
- un doseur (102) alimenté en aliments par une canalisation d'aliment (104),
- une auge (114) disposée sous le doseur (102),
- un système de déversement (108) prévu pour prendre alternativement une première position dans laquelle les aliments peuvent se déverser du doseur (102) dans l'auge (114) et une deuxième position dans laquelle les aliments ne peuvent pas se déverser du doseur (102) dans l'auge (114),
- un détecteur de présence (116) prévu pour détecter la présence d'un animal devant l'auge (114),
- une mémoire (120) dans laquelle est stockée l'identité de chaque animal et ses caractéristiques alimentaires,
- une unité de gestion (112) connectée au détecteur de présence (116), à la mémoire (120), et au système de déversement (108), et qui commande le système de déversement (108) en fonction de l'animal détecté par le détecteur de présence (116) et des données enregistrées dans la mémoire (120),
- une interface homme-machine (150) connectée à l'unité de gestion (112) et permettant d'assurer la programmation du système autonome de distribution (100) et l'enregistrement dans la mémoire (120) de l'identité de chaque animal et des caractéristiques alimentaires de chacun d'eux.

2. Système autonome de distribution (100) selon la revendication 1, **caractérisé en ce qu'**il comporte une canalisation d'eau (106) reliant une source d'eau à l'auge (114), et une vanne d'eau (110) prévue pour prendre alternativement une position ouverte dans laquelle l'eau peut se déverser de la canalisation d'eau (106) dans l'auge (114) et une position fermée dans laquelle l'eau ne peut pas se déverser de la canalisation d'eau (106) dans l'auge (114).

3. Système autonome de distribution (100) selon l'une des revendications 1 ou 2, **caractérisé en ce qu'**il comporte un capot (160) dans lequel sont logés le doseur (102), le système de déversement (108) et, éventuellement la vanne d'eau (110), et **en ce que** l'interface homme-machine (150) est fixée sur le capot (160).

4. Système autonome de distribution (100) selon l'une des revendications 1 à 3, **caractérisé en ce que** l'interface homme-machine (150) comporte des boutons (152) et un écran (154).

5. Système autonome de distribution (100) selon l'une des revendications 1 à 4, **caractérisé en ce qu'**il comporte en outre un câble d'alimentation électrique (156) destiné à être électriquement connecté à un réseau électrique.

6. Système autonome de distribution (100) selon l'une des revendications 1 à 5, **caractérisé en ce qu'**il comporte en outre un point d'accès réseau (158, 162) connectée à l'unité de gestion (112).

7. Système autonome de distribution (100) selon la revendication 6, **caractérisé en ce que** le point d'accès réseau (162) est un système de communication sans fil.

8. Système autonome de distribution (100) selon la revendication 6, **caractérisé en ce que** le point d'accès réseau (158) est une prise réseau (158).
